# EUROPEAN PATENT APPLICATION

(11) **EP 2 644 156 A1**
(43) Date of publication of application: **02.10.2013**
(21) Application number: 12161441.6
(22) Date of filing: 27.03.2012
(51) Int. Cl.: A61C 13/00, A61C 8/00

(54) **Method and device for comparison of a pre- and post-operative position of a dental implant**

(71) Applicant: Straumann Holding AG, 4002 Basel (CH)
(72) Inventor: Helbig, Andreas, 09111 Chemnitz (DE); Venanzoni, Sandro, 4002 Basel (CH)
(74) Representative: Modiano, Micaela Nadia

(57) **Abstract**

The present invention relates to a method and a device for determining a deviation between a pre-operatively planned (3 ,4) and a post-operatively obtained real position (6) and direction (7) of a virtual dental implant (2) and a real dental implant (5) in a patient's jawbone, comprising the steps of:
a) pre-operatively receiving first volume scan data (1a) of the patient's jawbone with denture;
b) selecting and planning the virtual dental implant (2) within the first volume scan data (1a), so as to position the virtual dental implant (2) within the first volume scan data (1a);
c) post-operatively receiving post-operative scan data (1c, 8) of a patient's jaw including the denture and information about the real position (6) and direction (7) of the real dental implant (5);
d) determining the real position (6) and direction (7) of the real dental implant (5) within the post-operative scan data (1c, 8);
e) registering the modified first volume scan data (1b) with the post-operative scan data (1c, 8), such that the jawbone and the denture match;
f) determining and indicating the deviation between the pre-operatively planned (3, 4) and the post-operatively obtained real position (6) and direction (7) of the virtual dental implant (2) and the real dental implant (5).

## Description

### Field of the Invention

The present invention relates to a method and a device for the determination of a deviation of a pre-operatively planned position and direction of a virtual dental implant and a post-operatively obtained real position and direction of a real dental implant within the jawbone.

### Background of the Invention

WO 2009 085 752 A2 discloses a method for measuring a position and a movement of a patient's teeth in the course of an orthodontic treatment. Therefore digital data representing the patient's dental structure is analyzed, for instance data provided by a radiological scanner and/or by an intraoral scanner. Thus a pre-operative situation of the position and direction of the teeth is measured and compared with a post-operative situation of the position and direction of the teeth after a first and after a subsequent orthodontic treatment.

US 7854 611 B2 discloses another method for the pre-operative planning of the dental implant within a virtual dental model of the patient's jaw derived from CT volume scan data which is registered with the 3D surface scan data of the patient's jaw in order to obtain a sharper surface of the teeth and in order to obtain and display information on tissue and gum.

US 2011 0 123 954 A1 also discloses another method of measuring the position and the direction of the real dental implant within the patient's jawbone by an intraoral optical scanner. Therefore a standardized scanbody is connected to the real dental implant having a specific reflective surface which represents the position and the direction of the real dental implant with respect to the surface of the teeth which is also scanned. Thus the abutment and a restorative prosthesis can be virtually planned within a 3D model of the patient's jaw, the 3D model including occlusal surfaces. Subsequently the abutment and the restorative prosthesis can be manufactured.

### Summary of the invention

The objective of the invention is to provide for a method and a device for comparing a pre-operatively planned position and direction of a virtual dental implant within volume scan data, such as CT data, with a post-operatively obtained real position and direction of a real dental implant in a patient's jawbone.

### Disclosure of the invention

The above objective as well as further objectives which will also become apparent from the following description are achieved by a method and a device comprising the features mentioned in the independent claim 1 and 13, respectively. Additional features and characteristics of the invention are mentioned in the dependent claims.

The present invention provides for a method for an effective comparison between a pre-operatively planned position and direction of a virtual dental implant within a patient's jawbone and a post-operatively obtained real position and direction of a real dental implant in a patient's jawbone after a treatment. Thus a dentist or a surgeon gets feedback about his treatment result or a quality of the implantation with respect to the pre-operative planning within a virtual volume model of the patient's jaw. The volume model of the patient's jaw is represented by first volume scan data, such as CT or DVT scan data of the jaw or jawbone, which is collected pre-operatively. Already existing planning software tools for the positioning of the virtual implant within the first volume scan data can be used. The real situation of the obtained real position and direction of the real dental implant in a patient's jawbone is derived post-operatively either from second volume scan data of a same part of the jawbone or from 3D surface scan data of the same part of the jaw, wherein a standardized scanbody, which is connected to the real dental implant, represents the real position and direction of the real dental implant. Thus the pre-operative and post-operative position and direction of the virtual dental implant or the real dental implant can be determined and compared.

The determination of the real position and direction of the dental implant within the post-operative scan data can be improved and made easier by a superposition of a second virtual dental implant over the real dental implant. Thus the center point and the direction of the real dental implant can be more easily compared with the center point and the direction of the virtual dental implant, wherein position and direction reference points within the virtual dental implant are the same as within the second virtual dental implant. This makes the determination of a deviation of the real dental implant from the virtual dental implant easy and precise.

Advantageously the real position and direction of the real dental implant can also be derived from the post-operative 3D surface scan data of the jaw. Therefore the standardized scanbody is connected to the real dental implant which gives a representation of the position and direction of the real dental implant with regard to the visible teeth and gum. By registering the post-operative 3D surface scan data with the first volume scan data, the comparison between the planned virtual and the real dental implant can also be accomplished which can be seen to be less stressful for the patient than radiologic radiation.

A generation of an iso-surface within the first volume scan data and/or within the second volume scan data allows a better and automatic registration of the first volume scan data and the post-operative scan data which is either the second volume scan data or the 3D surface scan data.

Further advantageous aspects of the invention are set out in the following detailed description.

One solution of a preferred embodiment according to the present invention is disclosed in the following drawings and in the detailed description but it shall not be limiting the invention.

### Brief description of the drawings

Fig. 1 is a representation of a pre-operatively obtained first volume scan image of a part of an upper jaw with remaining teeth and one missing tooth in-between, wherein the first volume scan image is for instance a CT or DVT image.
Fig. 2 is a representation of the same image as Fig. 1 but with an additional virtual dental implant which is pre-operatively planned and positioned within the first volume scan data and within the virtual jawbone.
Fig. 3 is a representation of an image of post-operative scan data, the post-operative scan data representing a second volume scan data of a same part of the upper jaw, wherein a real dental implant is implanted.
Fig. 4 is a representation of two registered images comprising the first volume data with the virtual dental implant according to Fig. 2 and the second volume data comprising the real dental implant according to Fig. 3, enabling a comparison between a position and direction of the virtual dental implant and a position and direction of the real dental implant.
Fig. 5 is a representation of another image of post-operative scan data, the post-operative scan data being 3D surface scan data of a same part of the upper jaw with the implanted real dental implant and with a visible protruding standardized scanbody connected to the real dental implant.
Fig. 6 is a representation of Fig. 5 with an additional reconstructed second virtual dental implant, associated with the standardized scanbody.

### Detailed description of a preferred embodiment

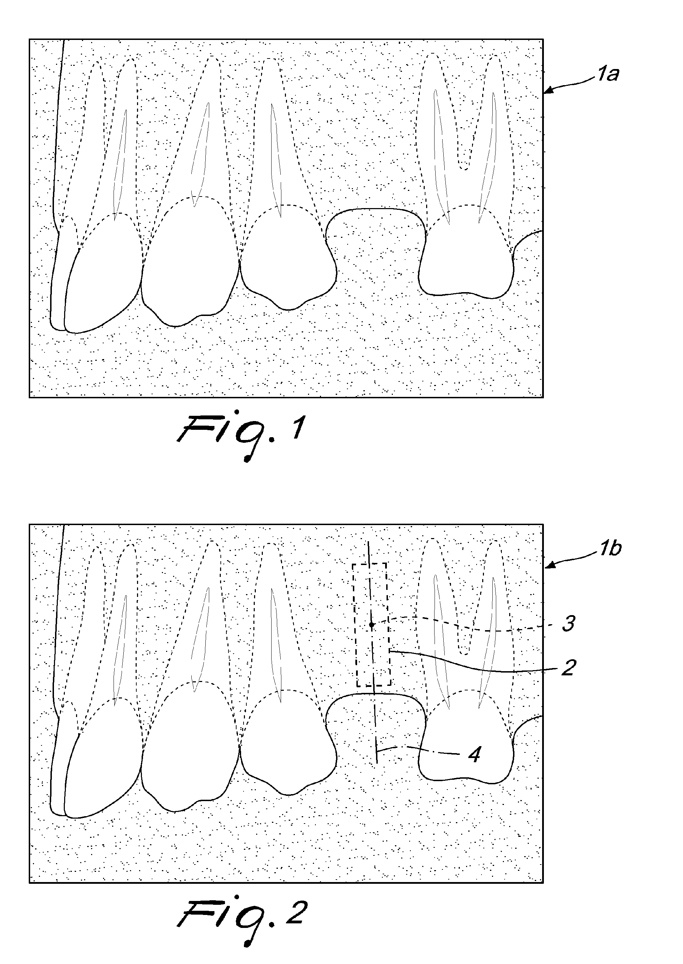

Fig. 1 is a representation of a pre-operatively produced first volume scan image of a part of a patient's upper jaw with remaining teeth and with a cavity in-between, the cavity being caused by a missing tooth. The first volume scan image is derived from first volume scan data la which is three-dimensional image data representing a density of the jaw or jawbone with bone, teeth and preferably tissue, wherein the first volume scan data is acquired for instance by a CT or a DVT device, but other imaging devices such as for instance NMR are also conceivable. The first volume scan data is displayed by a software tool such as for instance by CARES® which is distributed by the firm Institut Straumann AG and which allows a user to have a view in all three dimensions, such as for instance the view in certain cross sections or from certain top views. The first volume scan data 1a, as well as other data of the jaw or jawbone described in the following comprise mainly volume density data of an area of interest, where a real dental implant 5 shall be implanted. The first volume scan data 1a as well as the other data described in the following is obtained either through a device interface, through an external or internal data storage device, through a network interface or through the Internet.

Fig. 2 shows a representation with the same first volume scan image of the upper jaw according to Fig. 1, but wherein furthermore pre-operatively a virtual dental implant 2 has been inserted, obtaining modified first volume data 1b. With a software tool such as CARES®, for instance, the dentist is enabled to perform pre-operatively a planning of the virtual dental implant 2 within the jawbone by selecting the appropriate virtual dental implant 2 from a library and by positioning it within the jawbone appropriately where it shall be implanted. Thus the virtual dental implant 2 is planned in its virtual position and direction in the jawbone. As is appreciated by the person skilled in the art, planning the virtual position and direction includes planning the virtual depth. Fig. 2 shows the virtual position 3 and the virtual direction 4 of the virtual dental implant 5. Preferably thereupon a drilling template is manufactured to enable the dentist to drill a bore into the jawbone exactly at the planned position and in the planned direction and with the planned depth, such that the real implant 5 can be inserted or screwed into the jawbone as was pre-operatively planned. The precision of the real implant depends, inter alia, on the manufacturing precision of the drilling template, the precision of drilling into the jawbone and the accuracy with which the dentist was able to insert the dental implant in the jawbone.

The degree of accuracy or precision can be determined only post-operatively by measuring a post-operative real position 5 and a real direction 7 (and thus a real depth) of the dental implant within the patient's jawbone, and by comparing the real position and the real direction of the dental implant with the planned virtual position 3 and the virtual direction 4 of the same in the patient's jawbone or within the modified first volume scan data 1b, respectively. Preferably, a respective center point of the virtual and the real dental implant 2, 5 is defined as the respective virtual and real position, but another point such as the center of gravity point or any randomly marked point or the like (for instance a line, a combination of lines, a crosshair etc.) can be defined as well. As a respective virtual and real direction 4, 7, a longitudinal direction along the respective dental virtual and real implant 2, 5 is defined, but another kind of direction is also imaginable. As the respective virtual and real depth, preferably a respective depth from the surface of the jawbone, where the respective dental implant 2,5 is inserted, is defined, but another depth relative to another line is also imaginable.

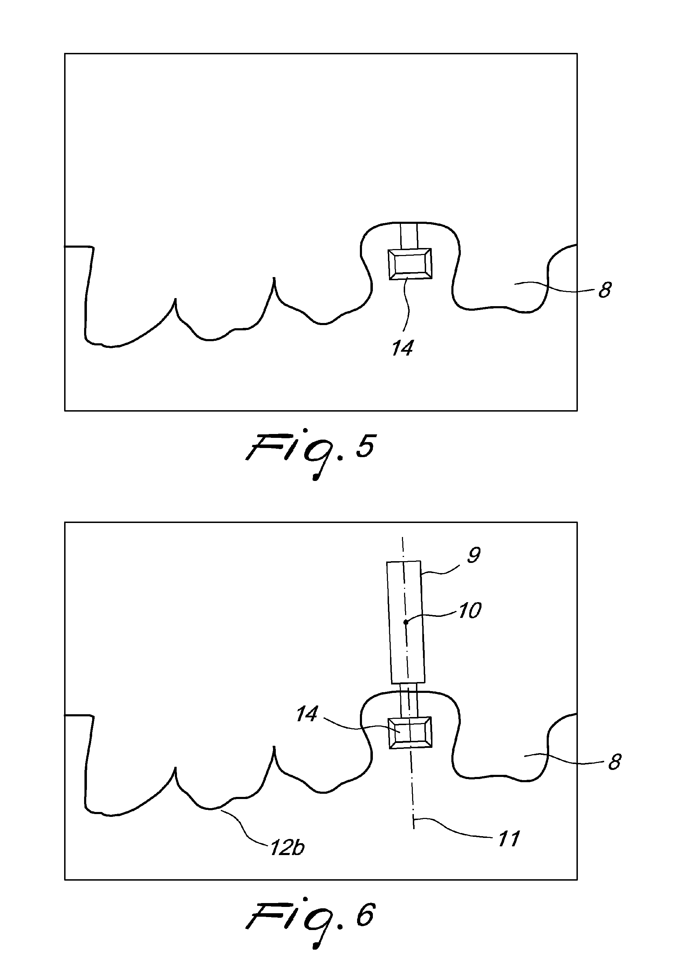

An acquisition of additional optical 3D surface scan data of the jaw of the area of interest is also imaginable providing further information about the tissue and gum and about the exact surface of the teeth. This additional optical 3D surface scan data can be registered with the first volume scan data 1a or the first modified volume scan data 1b, and can be further used for a subsequent better registration with other 3D surface scan data 8 which will be discussed later in conjunction with Fig. 5.

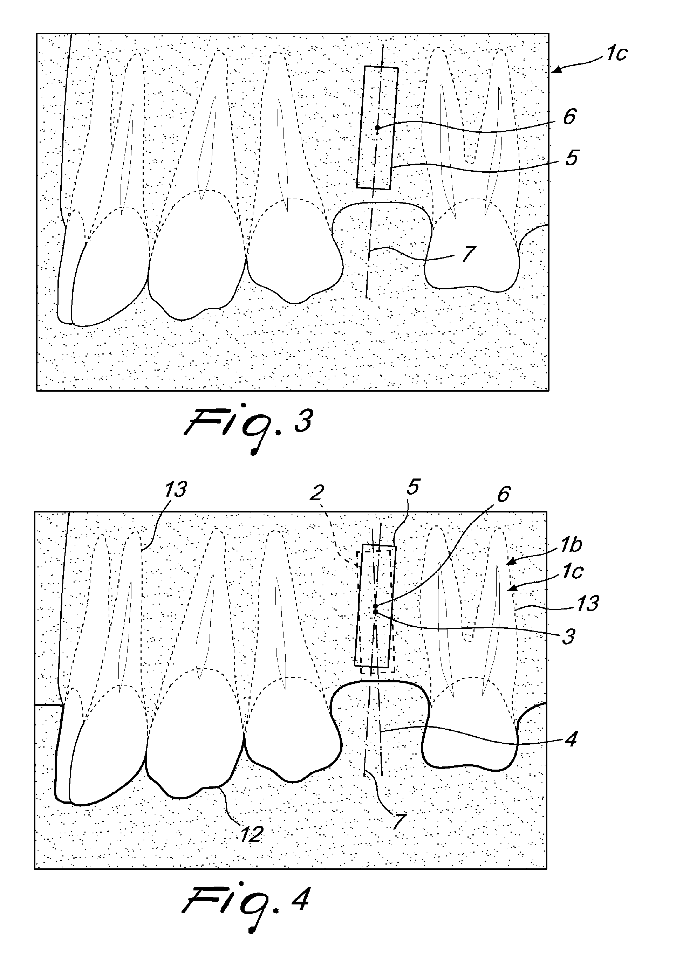

Fig. 3 is a representation of a second volume scan image of the part of the patient's upper jaw, produced post-operatively upon the implantation of the real dental implant 5 as it was pre-operatively planned. The second volume scan image is based on post-operative data, wherein the post-operative data is second volume scan data 1c. The second volume scan data 1c is data of the same kind as the first volume scan data 1a of Fig. 1. The same patient's jawbone and teeth and furthermore the implanted real dental implant 5 are visible.

In order to compare the respective position 3,6 and direction 4,7 of the planned virtual dental implant 2 with the real dental implant 5, the modified first volume scan data 1b (which is representative of the first volume scan image) and the second volume scan data 1c (which is representative of the second volume scan image) have to be registered, such that the respective jawbone and teeth are congruent. Thereupon the deviation of the position and direction of the virtual 2 and the real dental implant 5 becomes visible or can be determined.

The registration process of the modified first volume scan data 1b and the second volume scan data 1c is executed in such a way that the respective jawbone and teeth fit in an optimal manner. Such a registration is executed automatically or semi-automatically, but a manual registration is also imaginable. Preferably the registration is executed based on a respective iso-surface 12, 13 which is determined within the respective modified first volume scan data 1b and second volume scan data 1c, wherein the iso-surface is defined as a part of the respective data having the same density or density gradient. The iso-surfaces are preferably automatically registered by known algorithms such as for instance an algorithm which calculates iteratively closest points (ICP algorithm).

Fig. 4 is a representation of an image of the modified first volume scan data 1b registered with the second volume scan data 1c, wherein the respective position 3, 6 and direction 4, 7 of the respective virtual and real dental implant 2, 5 can be seen. The representation of Fig. 4 is the same as one shown on a conventional 2D display.

The surface of the teeth can be defined as an iso-surface 12. Another iso-surface 13 is preferably defined as the tooth roots. Additional iso-surfaces are also conceivable. The registration is made taking into account one or more iso-surfaces.

After the registration process, the respective deviations of the positions 3, 6 and directions 4, 7 are calculated and output. The determination and outputting of the respective deviations are preferably done graphically on the display and/or by parameter values. Preferably the dentist or other user can rotate the image and analyze the respective deviations from all perspectives as usual with an up-to-date CAD system. The deviation of the depth of the virtual 2 and the real implant 5 is preferably also calculated and output. A manual or semi-automatic determination of the respective deviations is also conceivable. Other deviation parameters, in addition to the position, direction and depth deviation, can also be defined and calculated.

For a better and more precise determination of the real position 6 and direction 7 of the real dental implant 5, a second virtual implant can be selected from the library and registered with the second volume scan data 1c, obtaining modified second volume scan data. The superposition of the second virtual dental implant and the real dental implant 5 can be executed automatically, semi-automatically or manually. Advantageously a same defined center point and direction, as also defined for the virtual implant 2, can then be used. Upon the registration of the second virtual implant with the second volume scan data 1c, the obtained modified second volume scan data is used for determining the deviation of the virtual dental implant 2 and the real dental implant 5. Thus the deviation of the coordinates of the respective virtual and real position 3, 6 and direction 4, 7 can be easily calculated and output.

During the registration process, it is understood that if the modified first volume scan data 1b is shifted, the virtual dental implant 2 is shifted the same way, and if the second volume scan data 1c is shifted the second virtual dental implant, if available, is shifted in the same way, such that the deviation between the virtual dental implant 2 and the real dental implant 5 or the second virtual dental implant, respectively, can be determined.

Figure 5 and Fig. 6 show another method of how the real position 6 and direction 7 of the real dental implant 5 can be determined. Figure 5 depicts a cross section of another post-operative scan data, the other post-operative scan data being 3D surface scan data 8 of the same part of the patient's jaw which is obtained post-operatively. The 3D surface scan data 8 is preferably obtained from an optical scanner. Post-operatively, upon the implantation of the real dental implant 5, a scanbody 14 is connected to the real dental implant 5, such that an upper end of the scanbody 14 protrudes from the gum and can be registered by the optical scanner. As the scanbody is a standardized element with a defined shape, length and a mechanical interface which fits the real dental implant 5, the upper end of the scanbody 14 represents, as is well known in the art, the real position 6 and the real direction 7 of the real dental implant 5, as well as the type of the real implant (which may be standard, wide neck, regular neck and the like). Thus by scanning the patient's jaw with the real dental implant 5 and the scanbody 14 connected thereto, the real position 6 and real direction 7 of the real dental implant 5 can be reconstructed with regard to the surface of the teeth and gum. As is well known in the art, the reconstruction is also based on the implant type information.

Fig. 6 shows the same cross section of the 3D surface scan data 8, wherein, however, the real dental implant 5 has been reconstructed by means of another second virtual implant 9. The reconstruction of the real dental implant 5 is carried out by selecting the second virtual implant 9 from a library and associating it with the scanbody 14. In this manner the real position 6 and real direction 7 of the real dental implant 5 are determined by the respective position 10 and direction 11 of the other second virtual implant 9 with regard to the surface of the teeth and gum.

In a subsequent step, the 3D surface scan data 8, which forms the other post-operative scan data, is registered with the modified first volume scan data 1b. This registration is accomplished preferably by defining an iso-surface 12 along the surface of the teeth within the modified first volume scan data 1b, as described above and depicted in Fig. 4, and by registering said iso-surface 12 with the 3D surface scan data 8, and preferably with the surface of the teeth 12b.

During the process of registering the 3D surface scan data 8 and the first volume scan data 1b, it is understood to be clear that if the modified first volume scan data 1b is shifted, the virtual dental implant 2 is shifted the same way, and if the 3D surface scan data 8 is shifted the other second virtual dental implant 9 is shifted the same way, such that the deviation between the virtual dental implant 2 and the real dental implant 5 or the second virtual dental implant 9, respectively, can be determined.

Another advantageous aspect of the present invention is to derive data relative to certain deviations associated with certain dentists, such that for instance it can be analyzed that a certain dentist is prone to screw the real dental implant 5 too much or too deeply or that another specific dentist has larger deviations than average. The present invention helps to supervise the implantation process over time and gives feed-back to the respective dentists about what they can improve or what shall be done with more care.

Furthermore, although the present invention has been described in connection with certain specific methods and algorithms for instructional purposes, the present invention is not limited thereto. The methods as described above can be implemented in a device or in a module for a CAD software tool.

Accordingly various modifications, adaptations and combinations of various features of the described methods can be practiced without departing from the scope of the present invention as set forth in the accompanying claims.

Where technical features mentioned in any claim are followed by reference signs, those reference signs have been included for the sole purpose of increasing intelligibility of the claims and accordingly, such reference signs do not have any limiting effect on the scope of each element identified by way of example by such reference signs.

### List of Reference Numerals s

- 1a: first volume scan data
- 1b: modified first volume scan data
- 1c: second volume scan data
- 2: virtual dental implant
- 3: virtual position
- 4: virtual directions
- 5: real dental implant
- 6: real position
- 7: real directions
- 8: 3D surface scan data
- 9: another second virtual dental implant
- 10: position
- 11: directions
- 12: iso-surface
- 12b: surface of the teeth
- 13: iso-surface
- 14: scanbody

## Claims

1. Method for determining a deviation between a pre-operatively planned and a post-operatively obtained real position (6) and direction (7) of a virtual dental implant (2) and a real dental implant (5) in a patient's jawbone, comprising the steps of:
a) pre-operatively obtaining first volume scan data (1a) of the patient's jawbone including the denture;
b) selecting and planning the virtual dental implant (2) within the first volume scan data (1a), so as to position the virtual dental implant (2) and obtain modified first volume scan data (1b) with a virtual position (3) and direction (4) of the virtual dental implant (2);
c) post-operatively receiving post-operative scan data (1c, 8) of a patient's jaw including the denture and information about the real position (6) and direction (7) of the real dental implant (5);
d) determining the real position (6) and direction (7) of the real dental implant (5) within the post-operative scan data (1c, 8);
e) registering the modified first volume scan data (1b) with the post-operative scan data (1c, 8), such that the jawbone and the denture match;
f) determining and indicating the deviation between the pre-operatively planned (3,4) and the post-operatively obtained real position (6) and direction (7) of the virtual dental implant (2) and the real dental implant (5).

2. Method according to claim 1, wherein the post-operative scan data (1c, 8) is second volume scan data (1c) of the patient's jawbone including the implanted real dental implant (5).

3. Method according to claim 2, wherein in step d) the determination of the real position (6) and direction (7) of the real dental implant (5) within the second volume scan data (1c) is carried out by superimposing a second virtual dental implant over the real dental implant (5), wherein the second virtual dental implant is selected from a library and wherein the second virtual dental implant represents the real dental implant (5) in its real position (6) and direction (7).

4. Method according to claim 3, wherein in step d) the superposition of the second virtual dental implant over the real dental implant (5) is carried out automatically, manually or semi-automatically.

5. Method according to claim 1, wherein the post-operative scan data (1c, 8) is 3D surface scan data (8) of a patient's jaw including a standardized scanbody (14) connected to the real dental implant (5), wherein the 3D surface scan data (8) is obtained by an intraoral optical scanner.

6. Method according to claim 5, wherein in step d) the determination of the real position (6) and direction (7) of the real dental implant (5) is achieved by a reconstruction via the standardized scanbody (14), the standardized scanbody (14) providing information on the position (9) and direction (10) of the underlying real implant (5).

7. Method according to one or more of the preceding claims, wherein the scanned volume data (1a, 1b, 1c) comprises information about a volume density of the jawbone and the denture as well as about a real dental implant (5), if present, and is obtained by a radiological method such as for instance CT or DVT, or by NMR.

8. Method according to one or more of the preceding claims, wherein in step b) the selecting and positioning of the virtual dental implant (2) within the first volume scan data (1a) is supported by a registration of additional 3D surface scan data of the jaw which is acquired pre-operatively.

9. Method according to one or more of the preceding claims, wherein the first volume scan data (1a) and the post-operative scan data (1c, 8) comprise mainly information about an area of interest of the jaw or jawbone, respectively, the real dental implant (5) being implanted in the area of interest.

10. Method according to one or more of the preceding claims, wherein the obtaining of the first volume scan data (1a) and/or of the post-operative scan data (1c, 8) occurs by means an external or an internal data storage device, by a network, a device interface or via the Internet.

11. Method according to one or more of the preceding claims, wherein in step f) the deviation is indicated by a display of the virtual dental implant (2) and the real implant (5), by a display of measurement values indicative of the deviation, or by a display of the virtual dental implant (2) and the real implant (5) as well as of measurement values.

12. Method according to one or more of the preceding claims, wherein the registering in step e) is carried out first by determination of at least one iso-surface (12, 13) within the first volume scan data (1a, 1b) and/or the post-operative scan data (1c, 8), the iso-surface (12, 13) being a surface with a same density, and secondly by registering or matching of the iso-surfaces (12, 13) by means of a registration algorithm, such as for instance an ICP algorithm.

13. Device for determining a deviation between a pre-operatively planned (3, 4) and a post-operatively obtained real position (6) and direction (7) of a virtual dental implant (2) and a real dental implant (5) in a patient's jawbone, wherein the determination of the deviation is carried out according to the method steps of one or more of the preceding claims, the device comprising :
- a computer system with at least one data interface for receiving
- first volume scan data (1a) of the patient's jawbone with denture; and
- post-operative scan data (1c, 8) of the patient's jaw including the denture and information about the real position (6) and direction (7) of the real dental implant (5);
- wherein the computer system is adapted:
a) to receive the first volume scan data (1a);
b) to enable a selection and positioning of the virtual dental implant (2) within the first volume scan data (1a), obtaining modified first volume scan data (1b) ;
c) to receive the post-operative scan data (1c, 8);
d) to determine the real position (6) and direction (7) of the real dental implant (5) within the post-operative scan data (1c, 8);
e) to register the modified first volume scan data (1b) with the post-operative scan data (1c, 8), such that the jawbone and the denture match;
f) to determine and indicate the deviation between the pre-operatively planned (3,4) and the post-operatively obtained real position (6) and direction (7) of the virtual dental implant (2) and the real dental implant (5).

14. Device according to claim 13, wherein in step d) the computer system is adapted:
- to superimpose a second virtual dental implant over the real dental implant (5), such that the second virtual dental implant represents the real dental implant (5) in its position (6) and direction (7), , wherein the second virtual dental implant is selected from a library, wherein the second virtual dental implant is selected from a library; and
- to determine the real position (6) and direction (7) of the real dental implant (5) within the post-operative scan data (1c, 8) by using the second virtual dental implant;
wherein the superposition of the second virtual dental implant over the real dental implant (5) is executed automatically, manually or semi-automatically.

15. Device according to claim 13, wherein the post-operative scan data (1c, 8) is 3D surface scan data (8) of a patient's jaw including a standardized scanbody (14) connected to the real dental implant (5), wherein the 3D surface scan data (8) is obtained by means of an intraoral optical scanner, and wherein the determination of the real position (6) and direction (7) of the real dental implant (5) occurs by means of the reconstruction thereof based on the standardized scanbody, the standardized scanbody (14) providing information on the position (9) and direction (10) of the underlying real implant (5).
